# EUROPEAN PATENT APPLICATION

(11) **EP 2 216 672 A1**
(43) Date of publication of application: **11.08.2010**
(21) Application number: 07832895.2
(22) Date of filing: 30.11.2007
(51) Int. Cl.: G02B 26/08, G02B 26/02

(54) **LIGHT SWITCHING DEVICE AND LIGHT SWITCHING METHOD**

(71) Applicant: Fujitsu Limited, Kawasaki-shi, Kanagawa 211-8588 (JP)
(72) Inventor: SAKAI, Yoshio, Kawasaki-shi Kanagawa 211-8588 (JP); MORI, Kazuyuki, Kawasaki-shi Kanagawa 2118588 (JP)
(74) Representative: Spilgies, Jan-Hendrik
(86) International application number: PCT/JP2007/073230
(87) International publication number: WO 2009/069233

(57) **Abstract**

An optical switching apparatus (100) changes an angle of MEMS mirrors in a MEMS mirror array reflecting light input thereto to perform switching control for switching output ports (114) to (116) that output the light reflected by the MEMS mirrors. An acquiring unit (130) acquires intensity information for the light output from the output ports (114) to (116). A MEMS control unit (140) performs intensity control of the output light by adjusting the angle of the MEMS mirrors, based on the intensity information acquired by the acquiring unit (130). A fluctuation detecting unit (150) detects a fluctuation greater than a predetermined fluctuation amount of the output light, based on the intensity information acquired by the acquiring unit (130). A suspending/resuming unit (160) suspends the intensity control by the MEMS control unit (140), if the fluctuation detecting unit (150) detects the fluctuation greater than the predetermined fluctuation amount.

## Description

### TECHNICAL FIELD

The present invention relates to an optical switching apparatus and an optical switching method for performing path switching and intensity control.

### BACKGROUND ART

Conventionally, in optical transmission systems, a micro electro mechanical system (MEMS) mirror made up of a MEMS device is used in an optical switching apparatus that switches optical signal paths. A MEMS mirror applies a high voltage between electrodes and concentrates electric charge to both electrodes to change the angle of the mirror by the electrostatic force.

An optical switching apparatus using the MEMS mirror controls intensity by monitoring the intensity of light output from an output port and controlling the intensity of the output light based on the monitoring (see, e.g., Patent Documents 1 and 2 below). Specifically, intensity is controlled by minutely changing the angle of the MEMS mirror based on the monitoring of the output light intensity and adjusting the coupling rate of the reflected light of the MEMS mirror to the output port.

Patent Document 1: Japanese Laid-Open Patent Publication No. 2003-322806
Patent Document 2: Japanese Laid-Open Patent Publication No. 2004-48187 DISCLOSURE OF INVENTION

### PROBLEM TO BE SOLVED BY THE INVENTION

However, the above conventional technology has a problem in that a malfunction of the intensity control occurs if the intensity of an input optical signal rapidly fluctuates. A rapid fluctuation of the input optical signal is generated by an abnormality at a light source on the transmission side or an optical fiber on the transmission path, for example. If a malfunction of the intensity control occurs, the rapid fluctuation of the input optical signal is amplified and transmitted, resulting in a problem that the optical transmission is destabilized. This problem will be described specifically hereinafter.

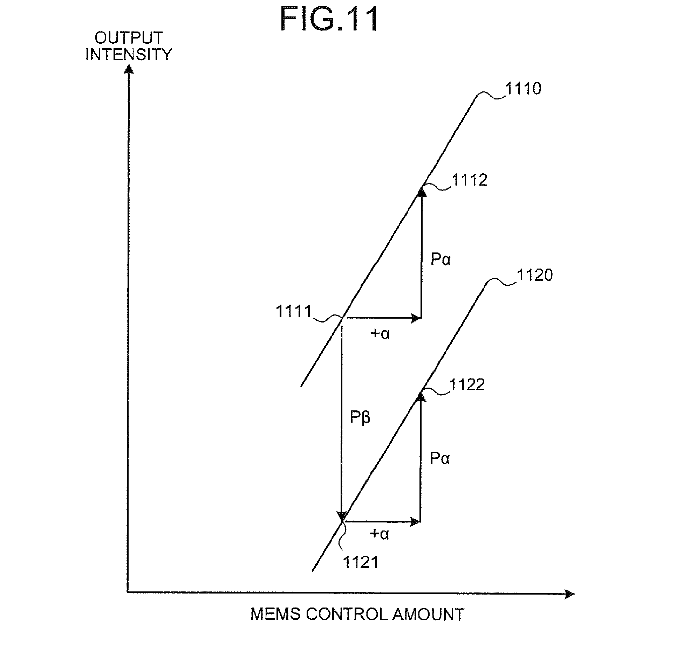

FIG. 11 is a graph of a relationship between MEMS control amount and output intensity. In FIG. 11, the horizontal axis indicates a control amount (MEMS control amount) for the angle of a MEMS mirror. The vertical axis indicates the intensity of output light (output intensity). Reference numerals 1110 and 1120 denote optical tolerances represented by a slope of the output intensity relative to the MEMS control amount. Description will be made of an example where the adjustment direction of the MEMS control amount increasing the intensity of the output light is the plus direction. Therefore, both the optical tolerances 1110, 1120 have a positive slope.

The optical tolerance 1110 indicates an optical tolerance when no rapid fluctuation occurs in input light. It is assumed that α denotes a unit of the MEMS control amount. In the optical tolerance 1110, if the MEMS control amount is changed by +α (changed from a point 1111 to a point 1112), the output intensity increases by Pα. If the intensity of the input light is rapidly reduced, the output intensity is reduced overall relative to the MEMS control amount (the reduced amount is assumed to be Pβ) and, therefore, the optical tolerance 1110 changes as depicted by the optical tolerance 1120.

In the optical tolerance 1120, if the MEMS control amount is changed by +α (changed from a point 1121 to a point 1122), after the MEMS control amount is changed by +α in the tolerance 1120, the output intensity (point 1122) is lower than the output intensity (point 1111) after the MEMS control amount is changed by +α in the tolerance 1110 although the output intensity increases by Pα.

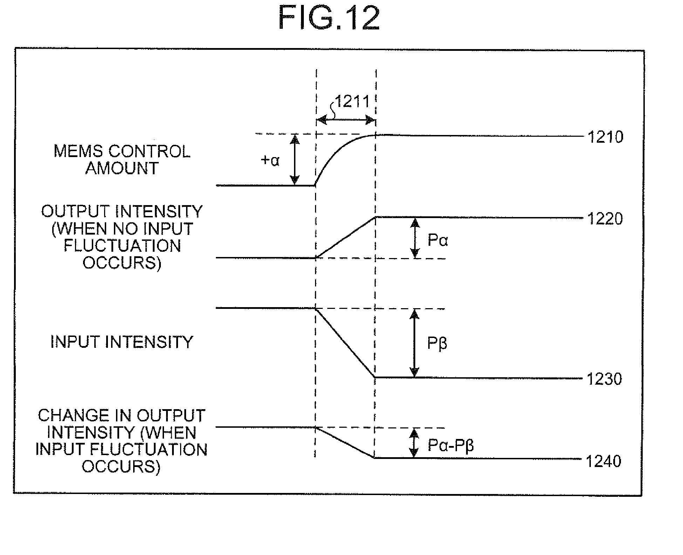

FIG. 12 is a graph of a rapid fluctuation of input light and a malfunction of the intensity control. In FIG. 12, reference numeral 1210 denotes a change in the MEMS control amount. In this example, the MEMS control amount is changed by +α during a period 1211. Reference numeral 1220 denotes a change in the intensity of light output from an output port (output intensity) when no rapid input fluctuation occurs.

In this example, the MEMS control amount is changed by +α to increase the intensity of the output light by Pα (see the tolerance 1110 of FIG. 11). Therefore, it is determinable that the adjustment direction of the MEMS control amount increasing the intensity of the output light is the plus direction. Therefore, the MEMS control amount is further changed by +α in response to a request of increasing the intensity of the output light. The MEMS control amount is changed by -α in response to a request of reducing the intensity of the output light.

Reference numeral 1230 denotes a change in the intensity of input light (input intensity). In this case, the intensity of the input light is rapidly reduced during the period 1211. The reduced amount of the intensity of the input light during the period 1211 is Pβ. Therefore, a change is made from the optical tolerance 1110 to the optical tolerance 1120 during the period 1211 (see FIG. 11).

Reference numeral 1240 denotes a change in the intensity of the light output from the output port (output intensity) when rapid input fluctuation occurs as denoted by reference numeral 1230. Since optical tolerance changes from the optical tolerance 1110 to the optical tolerance 1120 while the MEMS control amount is changed by +α, the intensity of the output light changes by Pα-Pβ (changes from the point 1111 to the point 1122 in FIG. 11). It is assumed that the amount Pβ by which the intensity of the input light decreases is greater than the amount Pα by which the intensity of the output light changes for the unit of control α (Pα<Pβ).

In this example, the amount Pα-Pβ of change in the intensity of the output light becomes negative and the intensity of the output light decreases during the period 1211 as depicted by reference numeral 1240. Thus, it is determined that that the adjustment direction of the MEMS control amount increasing the intensity of the output light is the minus direction. Therefore, the MEMS control amount is changed by -α in response to a request to increase the intensity of the output light (change from the point 1122 to the point 1121 in FIG. 11) and a malfunction of reducing the intensity of the output light occurs.

When a fluctuation of the intensity of the input light occurs and the fluctuation is larger than the amount Pα of change in the intensity of the output light for the unit of control α of the MEMS control amount, it is problematic that the change direction of the intensity of the output light is reversed relative to a change in a control amount of a MEMS mirror, resulting in a malfunction of the intensity control. If a malfunction of the intensity control occurs, the rapid fluctuation of the input light is amplified and transmitted, and a malfunction or damage may occur in an apparatus at a transmission destination, which destabilizes optical transmission.

It is an object of the present invention to provide an optical switching apparatus and an optical switching method capable of preventing such malfunction and stabilizing the optical transmission to resolve the problems associated with the conventional technology.

### MEANS FOR SOLVING PROBLEM

To solve the problems above and achieve an object, an optical switching apparatus that changes an angle of a movable mirror reflecting light input to the optical switching apparatus and performs switching control for switching an output port that outputs the light reflected by the movable mirror, includes an acquiring unit that acquires intensity information concerning the light output from the output port; a controller that based on the intensity information acquired by the acquiring unit and by adjusting the angle of the movable mirror, performs intensity control of the light output; a detector that based on the intensity information, detects a fluctuation greater than a predetermined fluctuation amount of the light output; and a suspending unit that suspends the intensity control by the controller, if the detector detects the fluctuation.

According to the optical switching apparatus and the optical switching method, if a rapid fluctuation of the input light occurs, malfunction of the intensity control is preventable by suspending the intensity control. Therefore, amplification and transmission of the rapid fluctuation of the input light causing a malfunction or damage in an apparatus at a transmission destination, can be prevented.

### EFFECT OF THE INVENTION

The optical switching apparatus and the optical switching method prevent malfunction to achieve stable optical transmission.

### BRIEF DESCRIPTION OF DRAWINGS

FIG. 1 is a functional diagram of an optical switching apparatus according to an embodiment;
FIG. 2 is a flowchart of an example of intensity control of the optical switching apparatus;
FIG. 3 is a flowchart of an example of suspension/resumption control of the optical switching apparatus;
FIG. 4 is an explanatory diagram of an example of a cycle of acquiring output intensity information;
FIG. 5 is an explanatory diagram of another example of a cycle of acquiring the output intensity information;
FIG. 6 is an explanatory diagram of a further example of a cycle of acquiring the output intensity information;
FIG. 7 is a flowchart of another example of the suspension/resumption control of the optical switching apparatus;
FIG. 8 is a flowchart of an example of a unit-of-control calculating operation of the optical switching apparatus;
FIG. 9 is a graph of the fluctuation amount of the output light depicted in FIG. 8;
FIG. 10 is an explanatory diagram of malfunction prevention for the optical switching apparatus;
FIG. 11 is a graph of a relationship between MEMS control amount and output intensity; and
FIG. 12 is a graph of a rapid fluctuation of input light and a malfunction of intensity control.

### EXPLANATIONS OF LETTERS OR NUMERALS

- 100: optical switching apparatus
- 110: switch unit
- 111 to 113: input port
- 114 to 116: output port
- 117: MEMS mirror array
- 121 to 123: optical coupler
- 130: acquiring unit
- 131 to 133: photoelectric conversion element
- 134: A/D converting unit
- 135: first acquiring unit
- 136: second acquiring unit
- 140: MEMS control unit
- 150: fluctuation detecting unit
- 160: suspending/resuming unit

### BEST MODE(S) FOR CARRYING OUT THE INVENTION

Preferred embodiments of an optical switching apparatus and an optical switching method will be described in detail with reference to the accompanying drawings.

### (Embodiment)

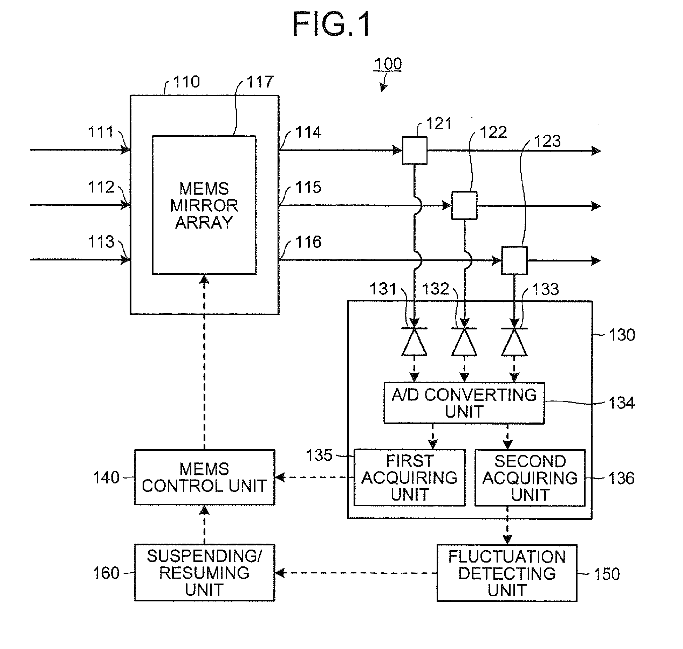

FIG. 1 is a functional diagram of an optical switching apparatus according to an embodiment. As depicted in FIG. 1, an optical switching apparatus 100 according to the embodiment includes a switch unit 110, optical couplers 121 to 123, an acquiring unit 130, a MEMS control unit 140, a fluctuation detecting unit 150, and a suspending/resuming unit 160. The optical switching apparatus 100 is applied to a router that selects a path of an optical signal in an optical transmission system, for example.

The switch unit 110 includes multiple ports and a MEMS mirror array 117. The switch unit 110 is assumed to be a 3-by-3 switch including three input ports 111 to 113 and three output ports 114 to 116. The switch unit 110 may be a wavelength selection switch that includes a diffraction grating, etc., for each wavelength component of input light.

The MEMS mirror array 117 includes multiple MEMS mirrors (movable mirrors) that reflect light input from the input ports 111 to 113. The MEMS mirror array 117 changes the angles of the MEMS mirrors under the control of the MEMS control unit 140. Each of the MEMS mirrors of the MEMS mirror array 117 is a movable mirror rotatable about two axes (assumed to be X-axis and Y-axis) orthogonal to each other, for example.

The MEMS mirror array 117 changes the amount of rotation about the X-axis and the amount of rotation about the Y-axis of the MEMS mirrors, respectively, under the control of the MEMS control unit 140. When the angles of the MEMS mirrors of the MEMS mirror array 117 are changed, the port coupled with the light reflected by the MEMS mirrors is changed to one of the output ports 114 to 116. The light reflected by the MEMS mirrors is output from the coupled output port among the output ports 114 to 116.

The optical couplers 121 to 123 branch and output to the acquiring unit 130, the light output from the output ports 114 to 116 of the switch unit 110. The acquiring unit 130 acquires output intensity information for the light output from the optical couplers 121 to 123. For example, the acquiring unit 130 includes photoelectric conversion elements 131 to 133, an A/D converting unit 134, a first acquiring unit 135, and a second acquiring unit 136. The photoelectric conversion elements 131 to 133 convert and output the light output from the optical couplers 121 to 123 into electric signals to the A/D converting unit 134.

The A/D converting unit 134 performs digital conversion of the electric signals output from the photoelectric conversion elements 131 to 133. The A/D converting unit 134 outputs the digital signals to the first acquiring unit 135 and the second acquiring unit 136 as output intensity information indicative of the intensities of the light output from the output ports 114 to 116, respectively.

The first acquiring unit 135 is a first acquiring unit that acquires the output intensity information output from the A/D converting unit 134 for each predetermined cycle.

A predetermined cycle is a cycle of performing the control of the angle of the MEMS mirrors in the MEMS mirror array 117. For example, the first acquiring unit 135 acquires the output intensity information output from the A/D converting unit 134 in cycles of 20 ms. The first acquiring unit 135 outputs the acquired output intensity information to the MEMS control unit 140.

The second acquiring unit 136 is a second acquiring unit that acquires the output intensity information output from the A/D converting unit 134. The cycle of the second acquiring unit 136 acquiring the output intensity information is the same cycle (20 ms) as the predetermined cycle of the first acquiring unit 135, for example. The cycle of the second acquiring unit 136 acquiring the output intensity information may be a cycle shorter than the predetermined cycle of the first acquiring unit 135. The second acquiring unit 136 outputs the acquired output intensity information to the fluctuation detecting unit 150.

The second acquiring unit 136 may acquire the output intensity for a period when the angle of the MEMS mirrors is not changed by the MEMS control unit 140, without acquiring the output intensity information for the period while the angle of the MEMS mirrors is being changed by the MEMS control unit 140. This can prevent the output intensity information acquired by the second acquiring unit 136 from indicating considerable fluctuation due to the control of the MEMS mirror and being falsely detected as a fluctuation of the output light.

The second acquiring unit 136 may acquire output intensity information obtained by subtracting from the output intensity indicated by the output intensity information output from the A/D converting unit 134 during the period while the angle of the MEMS mirrors is being changed by the MEMS control unit 140, the amount of change in the intensity of the output light due to the adjustment of the MEMS mirror angle. This may prevent the output intensity information acquired by the second acquiring unit 136 from indicating considerable fluctuation due to the control of the MEMS mirror and being falsely detected as a fluctuation of the output light.

The amount of change in the intensity of the output light due to the adjustment of the MEMS mirror angle (optical tolerance) may be obtained by changing the MEMS mirror angle while monitoring the output intensity information output from the A/D converting unit 134 to calculate the amount of change indicated by the output intensity information relative to the change in the MEMS mirror angle, for example.

The MEMS control unit 140 performs the switching control for switching the port outputting the light input from the input ports 111 to 113 to one of the output ports 114 to 116, based on path switching information received from an external source. For example, the switching control is performed by changing the angle of the MEMS mirrors of the MEMS array 117. An external source is, for example, a router equipped with the optical switching apparatus 100.

The MEMS control unit 140 performs intensity control for controlling the intensity of the light output from the output ports 114 to 116. For example, the MEMS control unit 140 finely adjusts the angle of the MEMS mirrors of the MEMS mirror array 117, based on the output intensity information output from the first acquiring unit 135. This changes the coupling rate of the reflected light of the MEMS mirrors to the output ports 114 to 116, whereby intensity control of the output light is enabled.

For example, the MEMS control unit 140 may finely adjust the angle of the MEMS mirrors of the MEMS mirror array 117 such that the input intensity information output from the first acquiring unit 135 indicates a maximal value. This enables intensity control to be performed that brings the intensity of the light output from the output ports 114 to 116 to the maximum intensity. Therefore, optical loss for the light output from the optical switching apparatus 100 can be reduced.

The MEMS control unit 140 may finely adjust the angle of the MEMS mirrors of the MEMS mirror array 117 such that the input intensity information output from the first acquiring unit 135 indicates a desired value. This enables intensity control to be performed that brings the intensity of the light output from the output ports 114 to 116 to a desired intensity. Therefore, the intensity of the light output from the optical switching apparatus 100 may arbitrarily be adjusted and the intensities of the output light can be kept constant relative to each other.

The MEMS control unit 140 suspends the intensity control if the suspending/resuming unit 160 outputs a suspension signal. The MEMS control unit 140 resumes the intensity control if the suspending/resuming unit 160 outputs a resumption signal. The MEMS control unit 140 maintains the angle of the MEMS mirrors of the MEMS mirror array 117 and continues the switching control even while the intensity control is suspended.

The MEMS control unit 140 may interrupt the output of light from the output ports 114 to 116, if the suspending/resuming unit 160 outputs the suspension signal. For example, the MEMS control unit 140 interrupts the output of light by significantly changing the angle of the MEMS mirrors such that the light reflected by the MEMS mirrors couples to none of the output ports 114 to 116. The suspension/resumption of the intensity control and the interruption of the output light are performed for each of the MEMS mirrors of the MEMS mirror array 117.

The fluctuation detecting unit 150, based on the output intensity information output from the second acquiring unit 136, detects a fluctuation equal to or greater than a threshold value (fluctuation exceeding a predetermined fluctuation amount) of the light output from the output ports 114 to 116. For example, the fluctuation detecting unit 150 determines that a fluctuation equal to or greater than the threshold value of the output light has occurred, if the difference between intensities indicated by output intensity information successively output from the second acquiring unit 136 is equal to or greater than a threshold value.

Alternatively, the fluctuation detecting unit 150 may determine that a fluctuation equal to or greater than the threshold value of the output light has occurred, if the difference between intensities indicated by output intensity information successively output from the second acquiring unit 136 continues to be equal to or greater than a threshold value for a certain period of time. When detecting a fluctuation equal to or greater than the threshold value of the output light, the fluctuation detecting unit 150 outputs to the suspending/resuming unit 160, information indicative of the detection of the fluctuation.

The fluctuation detecting unit 150 also has a function as a second detecting unit that after the suspension signal is output to the MEMS control unit 140 and based on the output intensity information output from the second acquiring unit 136, detects leveling off of the fluctuation equal to or greater than the threshold value of the output light. For example, the fluctuation detecting unit 150 determines that the fluctuation equal to or greater than the threshold value of the output light has leveled off, if the difference between intensities indicated the output intensity information successively output from the second acquiring unit 136 is smaller than a threshold value.

The fluctuation detecting unit 150 may determine that a fluctuation equal to or greater than the threshold value of the output light has leveled off, if the difference between intensities indicated by the output intensity information successively output from the second acquiring unit 136 continues to be smaller than a threshold value for a certain period of time. When detecting the leveling off of the fluctuation, the fluctuation detecting unit 150 outputs to the suspending/resuming unit 160, information indicative of the detection of the leveling off of the fluctuation.

If a fluctuation equal to or greater than the threshold value of the output light is detected, the fluctuation detecting unit 150 may output to a higher-order system of the optical switching apparatus 100, warning information indicative of the detection of a fluctuation equal to or greater than the threshold value of the output light. For example, the fluctuation detecting unit 150 outputs to the router equipped with the optical switching apparatus 100, warning information indicative of the detection of a fluctuation of the output light. The detection for fluctuations is performed by the fluctuation detecting unit 150 for the light output from the output ports 114 to 116, respectively.

The suspending/resuming unit 160 is a suspending unit that outputs a suspension signal to the MEMS control unit 140 to suspend the intensity control by the MEMS control unit 140 when the fluctuation detecting unit 150 outputs information indicative of the detection of a fluctuation. The suspending/resuming unit 160 may be an interrupting unit that outputs the suspension signal to the MEMS control unit 140 to interrupt the output of light when the fluctuation detecting unit 150 outputs the information indicative of the detection of the fluctuation.

The suspending/resuming unit 160 is also a resuming unit that outputs a resumption signal to the MEMS control unit 140 to resume the intensity control by the MEMS control unit 140 when the fluctuation detecting unit 150 outputs information indicative of the detection of a leveling off of a fluctuation. The output of a suspension signal or a resumption signal by the suspending/resuming unit 160 is performed for each of the MEMS mirrors that are in the MEMS mirror array 117 and correspond to the light output from the output ports 114 to 116.

The first acquiring unit 135, the second acquiring unit 136, the MEMS control unit 140, the fluctuation detecting unit 150, and the suspending/resuming unit 160 may be configured by a central processing unit (CPU) or a field programmable gate array (FPGA). Therefore, the optical switching apparatus 100 may be configured without providing a new component to a conventional optical switching apparatus. The optical switching apparatus 100 can detect a rapid fluctuation of the input light without providing an intensity monitor upstream from the switch unit 110.

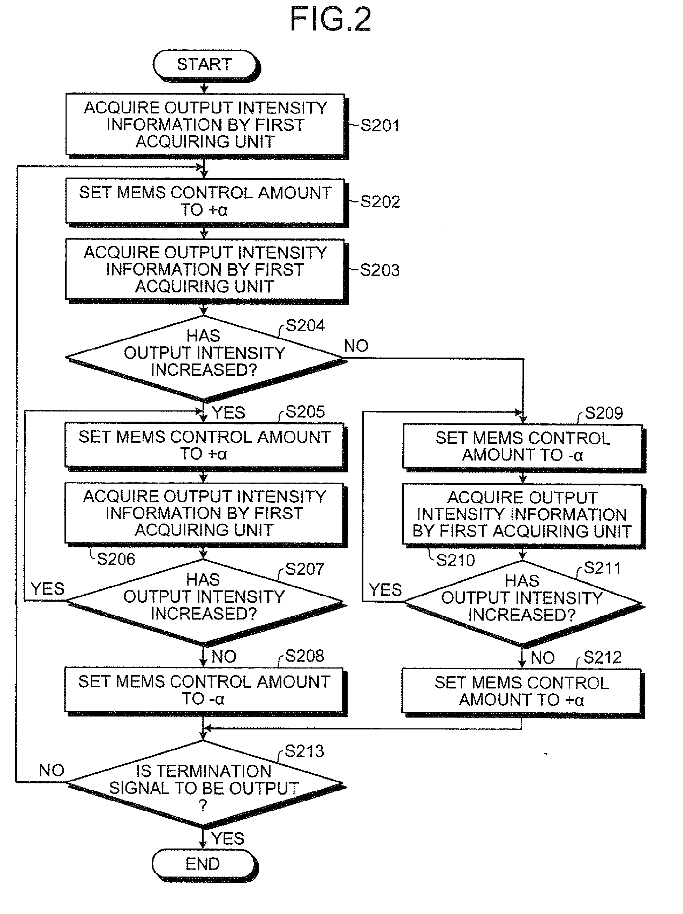

FIG. 2 is a flowchart of an example of the intensity control of the optical switching apparatus. The control of rotating one MEMS mirror about the X-axis will be described. After performing the switching control by rotating the MEMS mirror in the X-axis direction based on the path switching information, the first acquiring unit 135 and the MEMS control unit 140 perform the following intensity control. The amount of the rotation of the MEMS mirror about the X-axis will hereinafter simply be referred to as a MEMS control amount.

As depicted in FIG. 2, the first acquiring unit 135 acquires output intensity information (step S201). The MEMS control unit 140 changes the MEMS control amount by +α (step S202). α denotes the unit of control for a single rotation of the MEMS mirror. The first acquiring unit 135 then acquires the output intensity information (step S203).

Based on the output intensity information acquired at step S203 and previously-acquired output intensity information, it is determined whether the output intensity has increased (step S204). The previously-acquired output intensity information in this case is the output intensity information acquired at step S201 or, at step S206 or S210 of the previous loop.

If the output intensity has increased at step S204 (step S204: YES), the MEMS control unit 140 changes the MEMS control amount by +α (step S205). The first acquiring unit 135 acquires the output intensity information (step S206).

Based on the output intensity information acquired at step S206 and previously-acquired output intensity information, it is determined whether the output intensity has increased (step S207). The previously-acquired output intensity information in this case is the output intensity information acquired at step S203 or, at step S206 or S210 of the previous loop.

If the output intensity has increased at step S207 (step S207: YES), the flow returns to step S205. If the output intensity has not increased (step S207: NO), the MEMS control unit 140 changes the MEMS control amount by - α (step S208) and the flow proceeds to step S213. Changing by -α means that the MEMS mirror is rotated in the direction opposite to the direction of changing the MEMS control amount by +α at step S202, etc.

If the output intensity has not increased at step S204 (step S204: NO), the MEMS control unit 140 changes the MEMS control amount by -α (step S209). The first acquiring unit 135 acquires the output intensity information (step S210).

Based on the output intensity information acquired at step S210 and previously-acquired output intensity information, it is determined whether the output intensity has increased (step S211). The previously-acquired output intensity information in this case is the output intensity information acquired at step S203, or step S206 or S210 of the previous loop.

If the output intensity has increased at step S211 (step S211: YES), the flow returns to step S209. If the output intensity has not increased (step S211: NO), the MEMS control unit 140 changes the MEMS control amount by +α (step S212) and the flow proceeds to step S213.

If the rotation angle of the MEMS mirror is changed at step S208 or step S212, it is then determined whether the suspension signal is to be output from the suspending/resuming unit 160 (step S213). If the suspension signal is not to be output (step S213: NO), the control returns to step S202. If the suspension signal is to be output (step S213: YES), the MEMS control unit 140 suspends the intensity control.

As described, the first acquiring unit 135 and the MEMS control unit 140 perform the intensity control, with respect to the X-axis and the Y-axis, for each of the MEMS mirrors included in the MEMS mirror array 117. Although steps S208 and S212 are performed for recovery to the MEMS control amount immediately before the output intensity is reduced if the output intensity has been reduced by the MEMS control amount being changed at steps S205 and S209, steps S208 and S212 may be skipped.

Although description has been made of a case where the MEMS control unit 140 performs the intensity control to maximize the intensity of the output light, the intensity control may be performed to bring the intensity of the output light to a desired intensity by determining at step S204 whether the output intensity information acquired at step S203 comes closer to a desired value than the previously-acquired output intensity information.

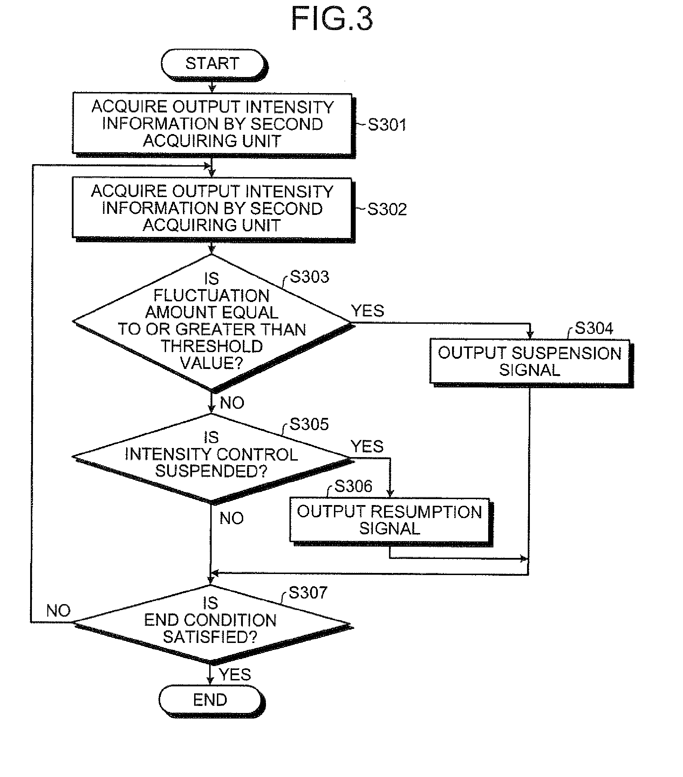

FIG. 3 is a flowchart of an example of the suspension/resumption control of the optical switching apparatus. The control related to one output port among the output ports 114 to 116 will be described. While the MEMS control unit 140 performs the intensity control (see FIG. 2), the second acquiring unit 136, the fluctuation detecting unit 150, and the suspending/resuming unit 160 perform the following suspension/resumption control. As depicted in FIG. 3, the second acquiring unit 136 acquires the output intensity information (step S301).

The second acquiring unit 136 then acquires the output intensity information again (step S302). The fluctuation detecting unit 150 determines whether the amount of fluctuation of the output light is at least equal to a threshold value, based on the output intensity information acquired at step S302 and previously-acquired output intensity information (step S303). The previously-acquired output intensity information is the output intensity information acquired at step S301 or, at step S302 of the previous loop.

If it is determined that the amount of fluctuation of the output light is equal to or greater than the threshold value (step S303: YES), the suspending/resuming unit 160 outputs a suspension signal to the MEMS control unit 140 (step S304) and the flow proceeds to step S307. If the amount of fluctuation of the output light is less than the threshold value (step S303: NO), it is determined whether the intensity control by the MEMS control unit 140 is suspended (step S305).

If the intensity control is suspended at step S305 (step S305: YES), the suspending/resuming unit 160 outputs a resumption signal to the MEMS control unit 140 (step S306) and the flow proceeds to step S307. If the intensity control is not suspended (step S305: NO), it is determined whether a predetermined end condition has been satisfied (step S307).

If the end condition has not been satisfied at step S307 (step S307: NO), the flow returns to step S302 and continues. If the end condition has been satisfied (step S307: YES), a series of the suspension/resumption control is ended. As described, the second acquiring unit 136, the fluctuation detecting unit 150, and the suspending/resuming unit 160 perform the suspension/resumption control for each of the MEMS mirrors included in the MEMS mirror array 117.

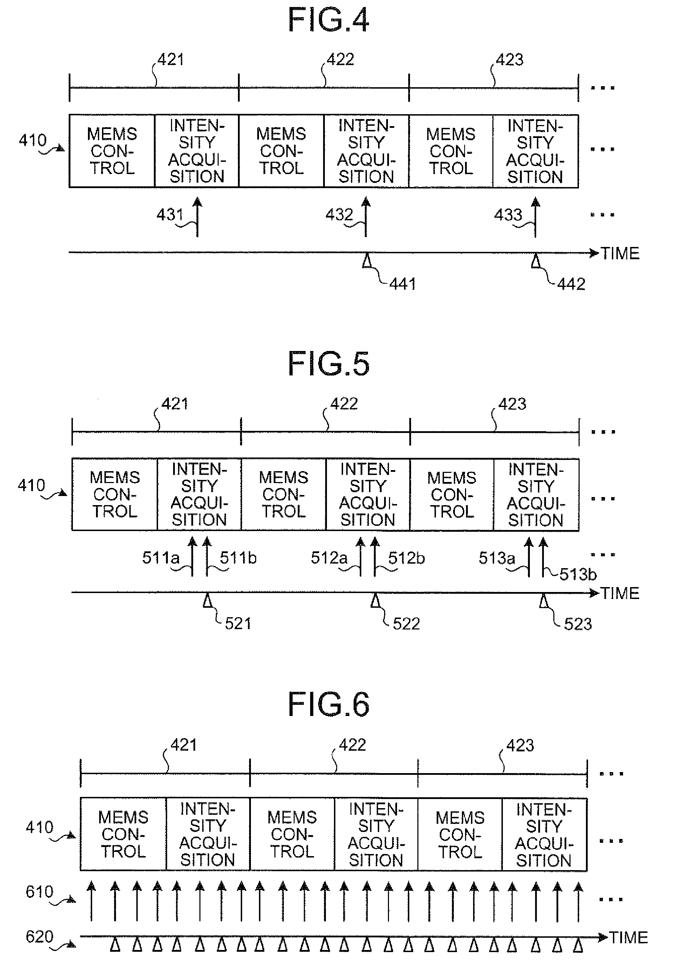

FIG. 4 is an explanatory diagram of an example of a cycle of acquiring the output intensity information. Reference numeral 410 of FIG. 4 denotes a cycle of the first acquiring unit 135 and the MEMS control unit 140 performing the control of the MEMS mirrors and the acquisition of the output intensity information. As indicated at steps S201 to S212 in FIG. 2, the first acquiring unit 135 alternately performs the control of the MEMS mirrors by the MEMS control unit 140 (steps S202, S205, and S209) and the acquisition of the output intensity information (steps S201, S203, S206, and S210).

A cycle of performing the control of the MEMS mirrors (MEMS control) and the acquisition of the output intensity information (intensity acquisition) once is referred to as a control cycle. Reference numerals 421 to 423... denote control cycles. Reference numerals 431 to 433 denote the time points when the second acquiring unit 136 acquires the output intensity information. The second acquiring unit 136 acquires the output intensity information for each of the control cycles 421 to 423.

Reference numerals 441, 442 denote the time points when the fluctuation detecting unit 150 performs fluctuation detection. In this case, in the control cycle 421, the second acquiring unit 136 acquires the output intensity information at the time point 431 (corresponding to step S301). Since the output intensity information is acquired only once in the control cycle 421, the fluctuation detecting unit 150 does not perform the fluctuation detection for the output light.

In the control cycle 422, the second acquiring unit 136 acquires the output intensity information at the time point 432 (corresponding to step S302). At time point 441, the fluctuation detecting unit 150 performs fluctuation detection for the output light, based on the output intensity information acquired at the time point 432 of the control cycle 422 and the output intensity information acquired at the time point 431 of the control cycle 421.

In the control cycle 423, the second acquiring unit 136 acquires the output intensity information at the time point 433 (corresponding to step S302). At time point 442, the fluctuation detecting unit 150 performs the fluctuation detection for the output light, based on the output intensity information acquired at the time point 433 of the control cycle 423 and the output intensity information acquired at the time point 432 of the control cycle 422.

FIG. 5 is an explanatory diagram of another example of a cycle of acquiring the output intensity information. In FIG. 5, portions identical to those depicted in FIG. 4 are denoted by the same reference numerals used in FIG. 4 and will not be described. In this case, the second acquiring unit 136 acquires the output intensity information multiple times (twice in this example) for each of the control cycles 421 to 423. Reference numerals 511a, 511b, 512a, 512b, 513a, and 513b denote the time points when the second acquiring unit 136 acquires the output intensity information.

Reference numerals 521 to 523 denote the time points when the fluctuation detecting unit 150 performs fluctuation detection. In this case, in the control cycle 421, the second acquiring unit 136 acquires the output intensity information at the time point 511a and 511b. Further, fluctuation detection for the output light is performed based on the output intensity information acquired at time points 511a and 511b.

In the control cycle 422, the second acquiring unit 136 acquires the output intensity information at the time points 512a and 512b. At time point 522, the fluctuation detecting unit 150 performs fluctuation detection for the output light, based on the output intensity information acquired at the time points 512a and 512b. In the control cycle 423, the second acquiring unit 136 acquires the output intensity information at the time points 513a and 513b.

At the time point 523, the fluctuation detecting unit 150 performs fluctuation detection for the output light, based on the output intensity information acquired at the time points 513a and 513b. As described, the fluctuation detecting unit 150 performs the fluctuation detection for the output light in each of the control cycles 421 to 423, based on the output intensity information acquired in the cycles.

In this case, in the control cycles 421 to 423, the second acquiring unit 136 acquires the output intensity information at the time points when the first acquiring unit 135 acquires the output intensity information, i.e., the time points when the angle of the MEMS mirrors is not changed by the MEMS control unit 140, whereby the output intensity information acquired by the second acquiring unit 136 is prevented from indicating considerable fluctuation due to the control of the MEMS mirror and being falsely detected as the fluctuation of the output light.

FIG. 6 is an explanatory diagram of a further example of a cycle of acquiring the output intensity information. In FIG. 6, portions identical to those depicted in FIG. 4 are denoted by the same reference numerals used in FIG. 4 and will not be described. In this case, the second acquiring unit 136 acquires the output intensity information for cycles that are significantly shorter than the control cycles 421 to 423.... Reference numeral 610 denotes the time points when the second acquiring unit 136 acquires the output intensity information. Reference numeral 620 denotes the time points when the fluctuation detecting unit 150 performs the fluctuation detection.

Since the output intensity information is acquired only once at the time point when the output intensity information is acquired for the first time, the fluctuation detecting unit 150 does not perform the fluctuation detection for the output light. Subsequently, each time the second acquiring unit 136 acquires the output intensity information, the fluctuation detecting unit 150 performs the fluctuation detection for the output light by using the output intensity information and the output intensity information acquired previously. By performing the fluctuation detection for the output light faster than the control cycle of the MEMS mirrors as above, a malfunction of the intensity control can be prevented even if a rapid fluctuation of the output light occurs.

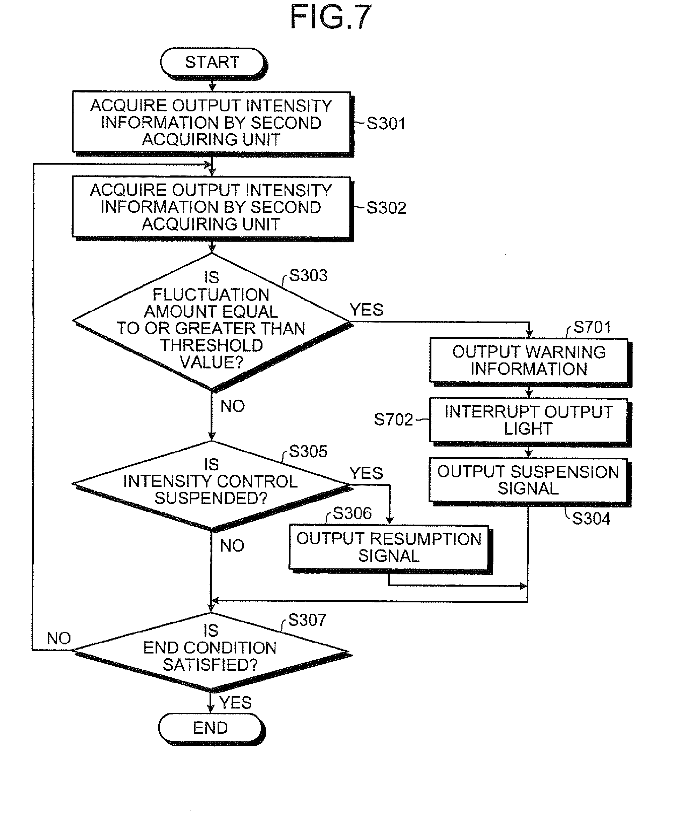

FIG. 7 is a flowchart of another example of the suspension/resumption control of the optical switching apparatus. In FIG. 7, steps identical to those depicted in FIG. 3 are denoted by the same reference numerals used in FIG. 3 and will not be described. The control related to one output port of the output ports 114 to 116 will be described. While the MEMS control unit 140 performs the intensity control, the second acquiring unit 136, the fluctuation detecting unit 150, and the suspending/resuming unit 160 may perform the following suspension/resumption control.

If the fluctuation amount of the output light is equal to or greater than the threshold value at step S303 (see FIG. 3) (step S303: YES), the fluctuation detecting unit 150 outputs to a higher-order system, warning information indicative of the detection of a fluctuation amount that is equal to or greater than the threshold value (step S701). The MEMS control unit 140 then interrupts the output light (step S702). The suspending/resuming unit 160 outputs a suspension signal to the MEMS control unit 140 (step S304).

Since, at step S701, the fluctuation detecting unit 150 outputs to the higher-order system, warning information indicative of the detection of a fluctuation amount equal to or greater than the threshold value as described, the higher-order system is able to issue warning information to a transmitting apparatus that has transmitted to the optical switching apparatus 100, the light corresponding to the output light having the fluctuation or to temporarily interrupt the optical signal transmitted from the transmitting apparatus.

Since, at step S702, the MEMS control unit 140 interrupts the output light having a rapid fluctuation, the output light can be prevented from being transmitted from the optical switching apparatus 100 and causing a malfunction or damage at a receiving apparatus that receives the output light. The control may be performed without step S701 or step S701.

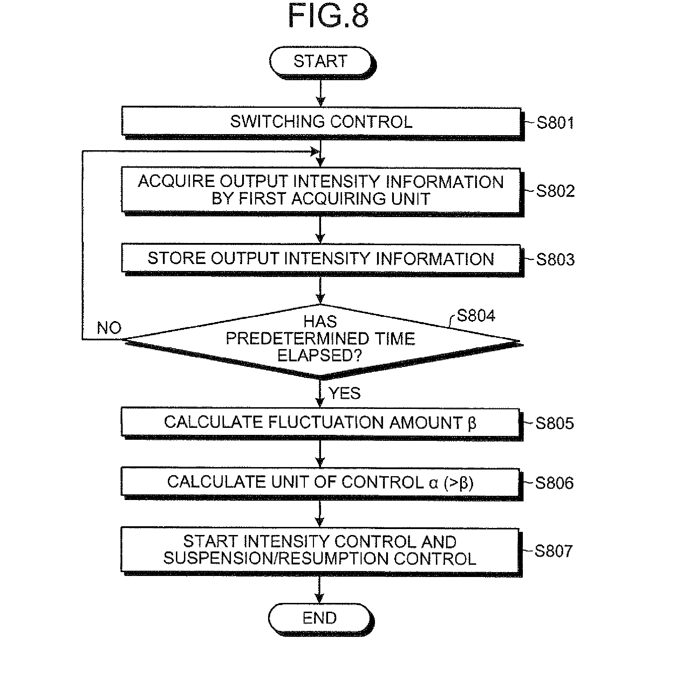

FIG. 8 is a flowchart of an example of a unit-of-control calculating operation of the optical switching apparatus. The unit of control for controlling the rotation of one MEMS mirror about the X-axis will be described. As depicted in FIG. 8, the MEMS control unit 140 performs the switching control by rotating the MEMS mirror about the X-axis, based on the path switching information (step S801).

The first acquiring unit 135 acquires the output intensity information (step S802). The output intensity information acquired at step S802 is stored (step S803).
It is determined whether a predetermined time has elapsed after step S801 (S804). If the predetermined time has not elapsed (step S804: NO), the operation returns to step S802.

If the predetermined time has elapsed at step S804 (step S804: YES), a fluctuation amount β of the output light is calculated based on the output intensity information stored at step S803 (step S805). The unit of control α(>β) of the MEMS control amount is then calculated based on the fluctuation amount β calculated at step S805 (step S806).

The intensity control (see FIG. 2) and the suspension/resumption control (see FIG. 3) are started by using the unit of control α calculated at step S806 (step S807) and a series of the unit-of-control calculating operations is ended. With the above steps, the unit of control α used in the intensity control depicted in FIG. 2 can be calculated based on the fluctuation amount β of the output light. The predetermined time determined at step S804 is arbitrarily be set as needed.

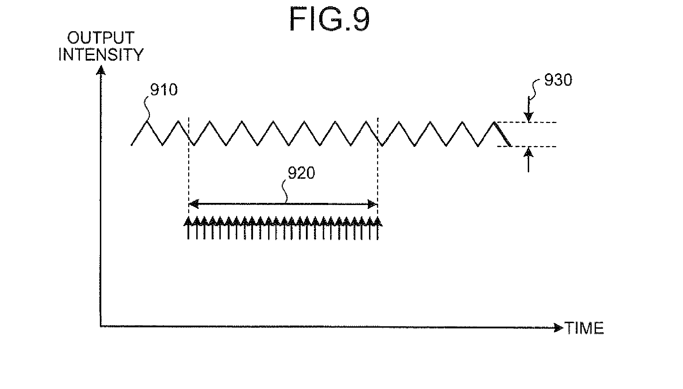

FIG. 9 is a graph of the fluctuation amount of the output light depicted in FIG. 8. In FIG. 9, the horizontal axis indicates time. The vertical axis indicates the intensity of the output light. The output light of one output port of the output ports 114 to 116 will be described. A waveform 910 indicates an example of a waveform of the output light output from the output port. A period 920 is a period (predetermined period) after step S901 until the predetermined time has been determined at step 804 to have elapsed.

Upward-arrows in the period 920 indicate the time points when the output intensity information is acquired at step S802. The output intensity information acquired at the time points indicated by the upward-arrows is stored at step S803. At step S805, for example, a difference 930 between the maximum value and the minimum value of the intensities indicated by the output intensity information stored at step S803 is calculated as the fluctuation amount β of the output light.

At step S806, the unit of control α of the MEMS control amount greater than the difference 930 is calculated. According to the above steps, the unit of control α used in the intensity control depicted in FIG. 2 can be set greater than the fluctuation amount β of the output light. As a result, a malfunction of the intensity control can be prevent provided that a fluctuation amount of the input light input to the optical switching apparatus 100 is smaller than the fluctuation amount β.

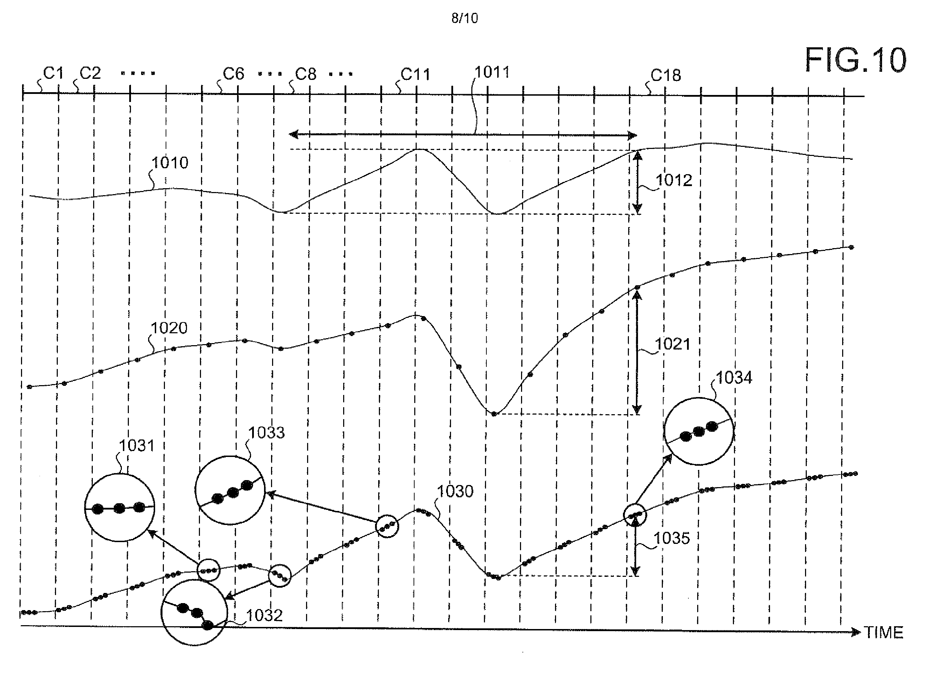

FIG. 10 is an explanatory diagram of malfunction prevention for the optical switching apparatus. In FIG. 10, the horizontal axis indicates time. Reference numerals C1, C2, ... indicate the control cycles of the MEMS mirror (corresponding to reference numerals 421, 422, ... of FIG. 4). Reference numeral 1010 indicates light input to the optical switching apparatus 100. A period 1011 indicates a period when a rapid fluctuation occurs in the input light 1010. As depicted in the period 1011, the rapid fluctuation of the input light 1010 occurs in the control cycle C8 and levels off in the control cycle C18.

Reference numeral 1012 indicates a range of the fluctuation of the input light 1010 during the period 1011. Reference numeral 1020 indicates the output light when the input light 1010 is input to a conventional optical switching apparatus. Reference numeral 1021 indicates a range of the fluctuation of the input light 1010 during the period 1011. During the period 1011, a malfunction occurs in the control of the MEMS mirrors due to the rapid fluctuation of the input light 1010.

Therefore, the rapid fluctuation of the input light 1010 is amplified and emerges in the output light 1020. Reference numeral 1030 indicates output light when the input light 1010 is input to the optical switching apparatus 100 and depicts a waveform when, as depicted in FIG. 5, the second acquiring unit 136 acquires the output intensity information a plurality of times (three times in this example) for each of the control cycles C1, C2 ....

Reference numeral 1031 denotes the time point when the second acquiring unit 136 acquires the output intensity information in the control cycle C6. Since the intensity fluctuation amount indicated by the output intensity information acquired three times is small at the time point 1031, the fluctuation detecting unit 150 does not output to the suspending/resuming unit 160, information indicative of detection of a fluctuation. Therefore, the suspending/resuming unit 160 does not output a suspension signal and the MEMS control unit 140 continues the intensity control.

Reference numeral 1032 denotes the time point when the second acquiring unit 136 acquires the output intensity information in the control cycle C8. Since the intensity fluctuation amount indicated by the output intensity information acquired three times is large at the time point 1032, the fluctuation detecting unit 150 outputs to the suspending/resuming unit 160, information indicative of detection of a fluctuation. Therefore, the suspending/resuming unit 160 outputs a suspension signal and the MEMS control unit 140 suspends the intensity control.

Reference numeral 1033 denotes the time point when the second acquiring unit 136 acquires the output intensity information in the control cycle C11. Since the intensity fluctuation amount indicated by the output intensity information acquired three times is large at the time point 1033, the fluctuation detecting unit 150 does not output to the suspending/resuming unit 160, information indicative of a leveling off of the fluctuation. Therefore, the suspending/resuming unit 160 does not output a resumption signal and the MEMS control unit 140 does not resume the intensity control.

Reference numeral 1034 denotes the time point when the second acquiring unit 136 acquires the output intensity information in the control cycle C18. Since the intensity fluctuation amount indicated by the output intensity information acquired three times is small at the time point 1033, the fluctuation detecting unit 150 outputs to the suspending/resuming unit 160, information indicative the fluctuation leveling off. Therefore, the suspending/resuming unit 160 outputs a resumption signal and the MEMS control unit 140 resumes the intensity control.

Reference numeral 1035 indicates a range of the fluctuation during the period 1011. Since the MEMS control unit 140 suspends the intensity control during the period 1011, no malfunction occurs in the MEMS mirror control due to the rapid fluctuation of the input light 1010. As a result, the fluctuation of the input light 1010 emerges in the output light 1030 without amplification. Therefore,
the impact on the optical transmission downstream may be constrained as compared to the output light 1020 of the conventional optical switching apparatus.

As described above, according to the optical switching apparatus 100 of the embodiment, if a rapid fluctuation occurs in input light, a malfunction of the intensity control can be prevented by suspending the intensity control, whereby a rapid fluctuation of the input light is prevented from being amplified and transmitted, thereby causing malfunction at or damage of an apparatus at a transmission destination. Therefore, stabilization of the optical transmission can be achieved.

The optical switching apparatus 100 of the embodiment may be configured without providing a new component to the conventional optical switching apparatus. The optical switching apparatus 100 can detect a rapid fluctuation of the input light without disposal of an intensity monitor upstream from the switch unit 110. Therefore, stabilization of the optical transmission can be achieved without increasing manufacturing cost.

According to the optical switching apparatus 100 of the embodiment, the unit of control α of the MEMS control, which is larger than the fluctuation amount β of the output light, may be calculated in advance and the intensity control may be performed by using the calculated unit of control α to more assuredly prevent malfunction of the intensity control. Therefore, further stabilization of the optical transmission can be achieved.

According to the optical switching apparatus 100 of the embodiment, even if a rapid fluctuation of the output light occurs, malfunction of the intensity control can be prevented by performing fluctuation detection for the output light faster than the control cycle of the MEMS mirrors. According to the optical switching apparatus 100 of the embodiment, a false detection of a fluctuation of the output light due to the control of the MEMS mirrors can be prevented by detecting a rapid fluctuation of the output light during the control cycles of the MEMS mirrors, based on the output intensity information acquired in the cycles.

False detection of a fluctuation of the output light due to the control of the MEMS mirrors can be prevented by acquiring the output light information at the time point when the angle of the MEMS mirrors is not changed by the MEMS control unit 140. Therefore, a rapid fluctuation of the output light can be detected accurately.

### INDUSTRIAL APPLICABILITY

The optical switching apparatus and the optical switching method are useful for an optical switching apparatus and an optical switching method for performing path switching and intensity control and are particularly suitable for the case that the intensity of input light is unstable.

## Claims

1. An optical switching apparatus that changes an angle of a movable mirror reflecting light input to the optical switching apparatus and performs switching control for switching an output port that outputs the light reflected by the movable mirror, comprising:
an acquiring unit that acquires intensity information concerning the light output from the output port;
a controller that based on the intensity information acquired by the acquiring unit and by adjusting the angle of the movable mirror, performs intensity control of the light output;
a detector that based on the intensity information, detects a fluctuation greater than a predetermined fluctuation amount of the light output; and
a suspending unit that suspends the intensity control by the controller, if the detector detects the fluctuation.

2. The optical switching apparatus according to claim 1, wherein
the acquiring unit includes a first acquiring unit that acquires the intensity information for each predetermined cycle and a second acquiring unit that acquires the intensity information for each cycle shorter than the predetermined cycle,
the controller performs the intensity control, based on the intensity information acquired by the first acquiring unit, and
the detector detects the fluctuation, based on the intensity information acquired by the second acquiring unit.

3. The optical switching apparatus according to claim 2, wherein
the second acquiring unit acquires a plurality of the intensity information in the predetermined cycle, and
the detector detects the fluctuation based on the plurality of the intensity information acquired in the predetermined cycle.

4. The optical switching apparatus according to claim 2, wherein
the second acquiring unit acquires from the intensity information, intensity information for a period during which the angle is not changed by the controller.

5. The optical switching apparatus according to claim 2, wherein
the second acquiring unit acquires intensity information obtained by subtracting from the intensity information concerning the light output from the output port during a period while the angle is changed by the controller, an amount of change in intensity of the light output due to adjustment of the angle.

6. The optical switching apparatus according to claim 1, further comprising:
a second detector that detects leveling off of the fluctuation after the intensity control is suspended by the suspending unit, and
a resuming unit that resumes the intensity control suspended by the suspending unit, if the leveling off of the fluctuation is detected by the second detector.

7. The optical switching apparatus according to claim 1, further comprising an output unit that outputs warning information indicative of detection of the fluctuation, if the fluctuation is detected by the detector.

8. The optical switching apparatus according to claim 1, further comprising an interrupting unit that interrupts output of the light output from the output port, if the fluctuation is detected by the detector.

9. The optical switching apparatus according to claim 1, wherein the controller performs the intensity control in a unit of control larger than an amount of fluctuation of the light output.

10. The optical switching apparatus according to claim 9, wherein
the acquiring unit acquires the intensity information for the predetermined period before the intensity control, and
the controller calculates for the predetermined period and based on the acquired intensity information for the predetermined period, an amount of fluctuation of the light to perform the intensity control in a unit of control larger than the calculated amount of fluctuation.

11. An optical switching method of changing an angle of a movable mirror reflecting light input to the optical switching apparatus and performing switching control for switching an output port that outputs the light reflected by the movable mirror, comprising:
acquiring intensity information concerning the light output from the output port;
performing, based on the intensity information acquired at the acquiring and by adjusting the angle of the movable mirror, intensity control of the light output;
detecting, based on the intensity information, a fluctuation greater than a predetermined fluctuation amount of the light output; and
suspending the intensity control at the performing intensity control, if the fluctuation is detected at the detecting.
